# EUROPÄISCHE PATENTSCHRIFT

(11) **EP 3 653 316 B1**
(45) Veröffentlichungstag und Bekanntmachung des Hinweises auf die Patenterteilung: **16.06.2021**
(21) Anmeldenummer: 19199790.7
(22) Anmeldetag: 26.09.2019
(51) Int. Cl.: B22C 7/06, B22C 9/06

(54) **GUSSWERKZEUG, BEISPIELSWEISE KERNSCHIESSWERKZEUG ODER KOKILLE, SOWIE EIN ENTSPRECHENDES GIESSVERFAHREN**
CASTING TOOL, FOR EXAMPLE CORE SHOOTING TOOL OR MOULD AND CORRESPONDING CASTING METHOD
OUTIL DE FONDERIE, PAR EXEMPLE OUTIL DE FABRICATION DES NOYAUX OU MOULE, AINSI QUE PROCÉDÉ DE COULÉE CORRESPONDANT

(30) Priorität: 14.11.2018 DE 102018128605
(43) Veröffentlichungstag der Anmeldung: 20.05.2020
(73) Patentinhaber: MEISSNER AG MODELL- UND WERKZEUGFABRIK, 35216 Biedenkopf-Wallau (DE)
(72) Erfinder: Flötzinger, Ulrich, 57334 Bad Laasphe (DE)
(74) Vertreter: Angerhausen, Christoph

(56) Entgegenhaltungen:
- WO-A1-2013/187239
- JP-A- H11 170 024
- US-A- 5 411 074
- US-A1- 2018 318 918

## Beschreibung

Die Erfindung geht aus von einem Gusswerkzeug mit den Merkmalen des Oberbegriffs des Anspruchs 1.. Ein derartiges Werkzeug ist aus der US 2018/318918 A1 bekannt. Ein weiteres Werkzeug beschreiben beispielsweise die DE 1280 505 A1, die WO 2013/187239 A1, die US 5,411,074 A und die JP H11 170024 A.

Solche Gusswerkzeuge können beispielsweise als Kernschießwerkzeuge für die Herstellung von Gießkernen aus Sand, Salz oder anderen Formgrundstoffen verwendet werden. Ebenso können diese Werkzeuge Kokillen in einem Kokillengießverfahren, Werkzeuge für den Druckguss sowie Formwerkzeuge für den Kunststoffspritzguss sein, etwa zur Herstellung eines glasmattenverstärkten Thermoplasts (GMT), beim Fließpressen von Sheet Molding Compounds (SMC) oder bei der Lang-Faser-Injektion (LFI).

Beispielsweise werden für das Kernschießen sogenannte Kernschießmaschinen verwendet, die in der Regel einen zweigeteilten massiv ausgebildeten Kernkasten aufweisen. Der Kernkasten grenzt einen Formhohlraum ab, der die äußere Form des zu erzeugenden Kerns abbildet. Beim Kernschießen wird in der Kernschießmaschine ein mit Bindemittel versetzter Formgrundstoff mit einem Schießdruck von beispielsweise 2 bis 6 bar bei definierter Arbeitstemperatur in den Kernkasten, eingebracht. Nach dem Aushärten des Kerns kann dieser in eine Gussform eingebaut werden. Nach dem Abguss wird der Formstoff, aus welchem der Kern besteht, durch Öffnungen in der Gusskonstruktion entfernt, wobei der Kern zerstört wird.

Im Kokillengießverfahren wird die Schmelze über einen oben liegenden Einguss in die Kokille gegossen und deren Hohlraum allein infolge der Schwerkraft ausgefüllt. Dabei werden zur Vermeidung von Volumendefiziten, den sogenannten Lunkern, bestimmte Partien des Gussstücks thermisch isoliert, um die Erstarrung zu verzögern, oder durch Kühlstifte gekühlt, um die Erstarrung zu beschleunigen.

Die DE 10 2011 111 583 A1 beschreibt darüber hinaus ein temperierbares Werkzeug zur Formgebung von Werkstücken, wobei die formgebende Kontur des Werkzeugs als Schale ausgebildet ist, die an einer von dem Formhohlraum abgewandten Seite eine Wärmeleitstruktur aus einem offenporigen, porösen und von einem Temperiermedium durchströmten Material aufweist. Dadurch soll eine verbesserte Temperierbarkeit des Werkzeugs bei der Formgebung von Werkstücken erreicht werden. Ein weiteres temperierbares Werkzeug in Schalenbauweise ist in der DE 10 2014 223 922 A1 beschrieben.

Die aus dem Stand der Technik bekannten temperierbaren Schalenwerkzeuge haben den Nachteil, dass sie nicht dazu geeignet sind, während des Formgebungsvorgangs, beispielsweise während des Kernschießvorgangs auf Prozessschwankungen, etwa Druck- oder Temperaturschwankungen, im Werkzeug aufgrund des einschießenden Materials zu reagieren, um reproduzierbare Formgebungsergebnisse, insbesondere Formkörper, wie Kerne mit homogenen Materialeigenschaften zu erzeugen.

Es ist daher die Aufgabe der Erfindung, ein Gusswerkzeug und ein entsprechendes Gießverfahren der eingangs beschriebenen Art derart weiterzuentwickeln, dass sie reproduzierbare Prozessergebnisse liefern und die individuelle Anpassung der Formkörper- bzw. Kerneigenschaften, insbesondere der Materialdichte erlauben.

Diese Aufgabe wird durch ein Gusswerkzeug mit den Merkmalen des Anspruchs 1 gelöst. Der nebengeordnete Anspruch 13 betrifft ein entsprechendes Gießverfahren. Vorteilhafte Ausführungsformen sind jeweils Gegenstand der abhängigen Ansprüche.

Demgemäß ist vorgesehen, dass der physikalische Sensor (7) einen mit der Schalengravur (4) mechanisch gekoppelten Dichtesensor (10) zur Ermittlung einer Dichte eines in den Formhohlraum (5) eingeschossenen Materials aufweist, wobei die Steuer- und Regeleinheit (9) dazu eingerichtet ist, abhängig von einem Messsignal des Dichtesensors (10) eine Heizleistung des Heizelements (8) nachzuführen.. Die physikalische Messgröße kann beispielsweise auch eine Temperatur und/oder eine spezifische Materialdichte sein. Der Sensor kann nicht unmittelbar mit dem Formhohlraum aufgenommenen Material in Kontakt stehen, sondern die physikalische Messgröße durch die Schalengravur hindurch erfassen. Um beispielsweise bei der Temperaturmessung durch die Wandung der Schalengravur die Messverzögerung gering zu halten, kann die Stärke der Wandung bis auf ein nach mechanischen Gesichtspunkten notwendiges Mindestmaß herabgesetzt werden. So kann etwa die Schalengravur zumindest im Bereich eines Messfelds des Sensors eine Wandstärke aufweisen, die zwischen 0,5 und 15 mm, vorzugsweise zwischen 0,5 und 10 mm und besonders bevorzugt zwischen 0,5 und 3 mm beträgt. Ist die Schale derart dünn ausgeführt, kann im Wesentlichen verzögerungsfrei von der Temperatur der Schale auf die Temperatur des eingeschossenen Materials geschlossen werden, um eine korrekte Formfüllung zu überwachen.

So kann beispielsweise ein an der Außenseite der Gravur angebrachter Temperatursensor das Einströmen des Formstoffes in ein Kernschießwerkzeug detektieren. Der kalte Formstoff kühlt das vorgeheizte dünne Schalenwerkzeug schnell ab und damit ergibt sich ein gut messbares Sensorsignal. Ebenso kann beispielsweise ein an der Außenseite der Gravur angebrachter Ultraschallsensor aufgrund der geringen Wandstärke der Schale durch die Schale hindurch eine Dichtemessung der Hohlraumfüllung durchführt werden. Beispielsweise kann detektiert werden, ob Formstoff im Hohlraum der Gravur ist oder nicht.

Das Gießwerkzeug ist grundsätzlich auf keine bestimmten Ausführungsformen beschränkt und kann lediglich beispielhaft ein Kernschießwerkzeug oder eine Kokille sein.

Durch die Verwendung eines unmittelbar mit der Schalengravur thermisch gekoppelten Temperatursensors sowie eines ebenfalls mit der Schalengravur thermisch gekoppelten Heizelements kann auf Temperaturschwankungen während des Schießprozesses reagiert werden, indem die Heizleistung des Heizelements bedarfsweise in-situ nachgeregelt wird. Dies wird insbesondere auch dadurch möglich, dass die Gravur als Schalengravur ausgebildet ist, mithin eine geringe Wärmekapazität aufweist, so dass Temperaturschwankungen schnell erfasst und Heizleistungen ebenso unverzögert in den Formhohlraum eingetragen werden können.

Das Werkzeugoberteil und das Werkzeugunterteil können aufgrund der guten wärmeleitfähigen Eigenschaften zumindest im Bereich der Schalengravur aus einem Metall bestehen, etwa aus einem legierten, hochlegierten oder unlegierten Stahl, aus einer Aluminiumlegierung, einer Kupferlegierung wie Bronze oder Messing, oder aus einer Zinklegierung wie Zamak. Ebenso können das Werkzeugoberteil und das Werkzeugunterteil zumindest im Bereich der Schalengravur aus einem wärmeleitfähigen Kunststoff bestehen. Besonders vorteilhaft sind Werkszeuge, die eine Füllung aufweisen, die etwa mit einer Graphitfüllung ausgerüstet sind und somit eine besonders hohe Wärmeleitfähigkeit aufweisen. Ebenso sind aber auch keramische Werkstoffe, wie Aluminiumoxid, oxidische Keramiken, Nitritkeramik und Carbide für die Herstellung des Werkzeugoberteils und/oder des Werkzeugunterteils geeignet, ebenso eine silikatische Keramik, Mullit und Magnesiumoxidkeramiken. Weiterhin sind Kohlenstoff und Graphit als Werkzeugmaterial geeignet.

Der mindestens eine physikalische Sensor ist auf keine bestimmten Ausführungsformen beschränkt und kann einen einzigen Sensor zur Erfassung einer einzigen physikalischen Messgröße oder mehrere Sensoren zur Erfassung unterschiedlicher physikalischer Messgrößen aufweisen. Der physikalische Sensor kann beispielsweise einen mit der Schalengravur thermisch gekoppelten Temperatursensor aufweisen, wobei das Gusswerkzeug mindestens ein mit der Schalengravur thermisch gekoppeltes Heizelement und eine Steuer- und Regeleinheit aufweisen kann, die dazu eingerichtet ist, zur Erzielung einer gleichmäßigen Gusswerkstückdichte abhängig von einem Messsignal des Temperatursensors eine Heizleistung des Heizelements nachzuführen.

Ein geeigneter Dichtesensor ist beispielsweise ein Ultraschallsensor mit oder ohne integrierte Ultraschallquelle. Dabei wird der durch die Wandung der Schalengravur in den Formhohlraum eindringende Schall abhängig von der Dichte des Materials im Formhohlraum reflektiert, sodass das Signal des Ultraschallsensors für die Dichteauswertung genutzt werden kann.

Eine Platte des Werkzeugoberteils oder des Werkzeugunterteils kann die Schalengravur aufweisen, wobei die Platte eine Dicke aufweist, die geringer als eine Tiefe der Schalengravur parallel zur Dicke ausgebildet ist. So kann vorgesehen sein, dass die Platte an einer dem Formhohlraum abgewandten Außenseite eine erhabene Kontur aufweist, die zu einer Kontur der Schalengravur zumindest abschnittsweise korrespondiert und vorzugsweise ein Negativ der Kontur der Schalengravur ist. Die Schalengravur kann mit Hilfe eines Gießverfahrens hergestellt werden. Gegebenenfalls kann die gegossene Schalengravur spanend nachbearbeitet werden.

An die Schalengravur kann ein mehrkanaliges Formentlüftungssystem für die Entlüftung des Formhohlraums an unterschiedlichen Positionen des Formhohlraums angeschlossen sein. Das Formentlüftungssystem kann einen oder mehrere Luftdrucksensoren aufweisen, die an den unterschiedlichen Positionen einen jeweiligen Entlüftungsdruck des Formhohlraums messen.

Das Formentlüftungssystem kann weiterhin einen Ventilblock mit mehreren unabhängig voneinander steuerbaren Ventilen aufweisen, wobei jedes Ventil über eine Luftleitung mit einer anderen der Positionen fluidisch in Verbindung steht. Die Steuer- und Regeleinheit kann dazu eingerichtet sein, abhängig von mindestens einem Messsignal der Luftdrucksensoren einen Öffnungsgrad mindestens eines der Ventile zu regeln.

An die Schalengravur kann ein mehrkanaliges Formbelüftungssystem für die selektive Luftdruckbeaufschlagung des Formhohlraums an unterschiedlichen Positionen des Formhohlraums angeschlossen sein. Das Formbelüftungssystem kann einen Ventilblock mit mehreren unabhängig voneinander steuerbaren Ventilen aufweisen, wobei jedes Ventil über eine Luftleitung mit einer anderen der Positionen fluidisch in Verbindung steht. Das Formbelüftungssystem kann durch die selektive Luftdruckbeaufschlagung dazu verwendet werden, nach dem Einschießen des Gusswerkstoffs und gegebenenfalls Abkühlen des Gusswerkzeugs durch selektive Luftdruckbeaufschlagung das Gussstück aus der Form herauszudrücken. So kann beispielsweise über eine gleichmäßige Luftdruckbeaufschlagung sichergestellt werden, dass beim Kernschießen der Kern beim Herausdrücken aus der Form nicht verkantet und damit seine Geometrie beeinträchtigt wird.

Das mindestens eine Heizelement kann eine in einem wärmeleitenden Mantel aufgenommene Heizwendel oder einen Heizstrahler aufweisen, etwa einen IR-Strahler. Der IR-Strahler kann über einen Luftspalt beabstandet von der Außenseite der Schalengravur vorgelagert und zugewandt sein.

Das mindestens eine Heizelement kann mit einer erhabenen Kontur der Platte, die zu einer Kontur der Schalengravur zumindest abschnittsweise korrespondiert, thermisch gekoppelt sein, etwa in wärmeleitendem Kontakt stehen. Durch die Anpassung der Geometrie des Heizelements an eine Kontur oder einen Konturabschnitt der Schalengravur kann örtlich selektiv Wärme in den Formhohlraum eingebracht werden. Wenn das Heizelement eine regelbare Heizleistung aufweist, kann zusätzlich der Wärmestrom in den Formhohlraum reguliert werden. Das Heizelement kann beispielsweise eine Geometrie aufweisen, die eine erhabene Kontur der Platte an ihrer von der Schalengravur abgewandten Außenseite nachbildet.

Das Gusswerkzeug kann weiterhin ein Auswerfsystem aufweisen, das dazu eingerichtet ist, die Schalengravur zwischen einer Ausgangsgeometrie und einer Auswerfgeometrie zu verformen, insbesondere elastisch zu verformen. Das Auswerfsystem kann dazu beispielsweise im Randbereich des Werkzeugoberteils und/des Werkzeugunterteils angreifen und mechanisch vorspannen. Zur Regulierung der Verformung beim Vorspannen des Werkzeugoberteils und/oder des Werkzeugunterteils kann vorgesehen sein, dass die Platte, vorzugsweise die Schalengravur der Platte, abschnittsweise aus einem ersten Material und abschnittsweise aus einem zweiten Material besteht, wobei die beiden Materialien sich unterscheidende Elastizitätsmodule aufweisen.

Die Schalengravur kann an einer dem Formhohlraum zugewandten Innenseite eine die Haftung zwischen der Schalengravur und dem in dem Formhohlraum aufgenommenen Material vermindernde Oberflächenbeschichtung aufweisen. Mithilfe der Beschichtung kann beispielsweise ein Verkleben des Kerns mit der Schalengravur und damit können große Kräfte an der Gravur beim Entformen, die insbesondere dünnwandige Gravuren beschädigen könnten, vermieden werden.

Gemäß einem anderen Aspekt wird ein Gießverfahren beschrieben, das die Schritte aufweist:
- Bereitstellen eines Gusswerkzeugs der zuvor beschriebenen Art und Einschießen eines fließfähigen und aushärtbaren Materials, etwa eines mit einem Bindemittel versetzten Formgrundstoff, in den Formhohlraum unter einem Schießdruck, wobei die Schalengravur mit einem Heizelement geheizt wird; und
- Messen einer physikalische Messgröße bezüglich des in den Formhohlraum einschießenden Materials, etwa einer Temperatur der Schalengravur während des Einschießens, und Nachregeln einer Heizleistung des Heizelements. abhängig von der gemessenen Temperatur, wobei während des Einschießens eine Dichte des eingeschossenen Materials gemessen und abhängig von der gemessenen Dichte die Heizleistung des Heizelements (8) nachgeführt wird.

Während des Einschießens kann mit einem mehrkanaligen Formentlüftungssystem der Formhohlraum an unterschiedlichen Positionen entlüftet und mit Luftdrucksensoren an den unterschiedlichen Positionen ein jeweiliger Entlüftungsdruck des Formhohlraums gemessen werden.

Abhängig von mindestens einem Messsignal der Luftdrucksensoren kann ein Öffnungsgrad mindestens eines Ventils geregelt werden, das über eine Luftleitung mit einer der Positionen fluidisch in Verbindung steht. Der Öffnungsgrad des Ventils kann so eingestellt werden, dass sich ein gewünschter Entlüftungsdruck des Formhohlraums an der Position des jeweiligen Luftdrucksensors einstellt.

Nach dem Einschießen und Abkühlen des Gusswerkzeugs kann ein in dem Formhohlraum angeordnetes und ausgeformtes Gussstück mit einem Formbelüftungssystem aus dem Formhohlraum ausgetrieben werden, wozu das Formbelüftungssystem über einen Ventilblock mit mehreren unabhängig voneinander steuerbaren Ventilen, die jeweils über eine Luftleitung mit einer anderen Position des Formhohlraums fluidisch in Verbindung stehen, das Gussstück mit einem Luftdruck beaufschlagt.

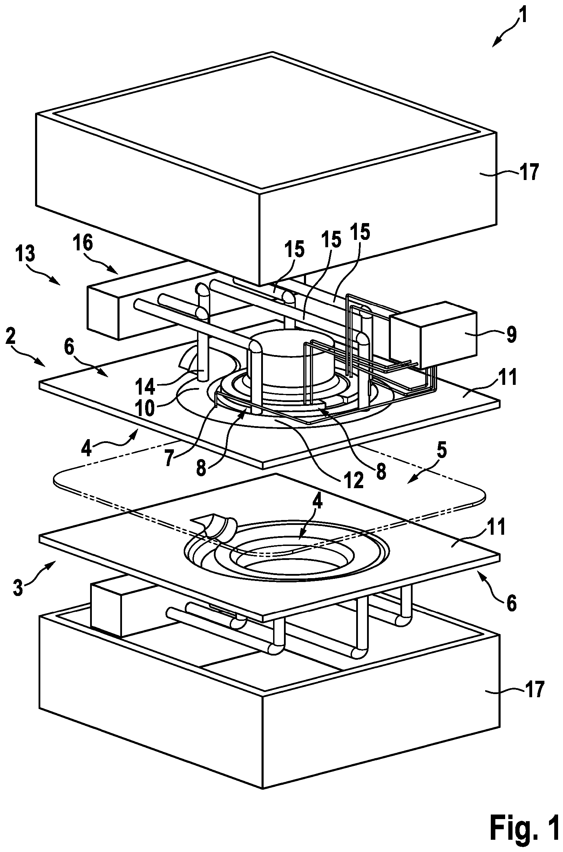

Weitere Einzelheiten der Erfindung werden anhand der nachstehenden Figur 1 erläutert. Diese zeigt eine beispielhafte Ausführungsform eines erfindungsgemäßen Gusswerkzeugs, das als ein Kernschießwerkzeugs ausgebildet ist, in Explosionsdarstellung.

Das Kernschießwerkzeug 1 weist ein Werkzeugoberteil 2 und ein Werkzeugunterteil 3 auf, die in einem zweiteiligen Kernkasten 17 aufgenommen sind und an gegenüberliegenden Seiten jeweils eine Schalengravur 4 aufweisen. Bei dem in einer Explosionsdarstellung gezeigten Kernschießwerkzeug 1 bilden in einem zusammengesetzten Zustand die Schalengravuren 4 des Werkzeugoberteils 2 und des Werkzeugunterteils 3 einen Formhohlraum 5, der zwischen dem Werkzeugoberteil 2 und dem Werkzeugunterteil 3 ausgebildet ist und die Kernform abbildet. Die in der Darstellung obere Schalengravur 4 weist an einer dem Formhohlraum 5 abgewandten Außenseite 6 mehrere mit der Schalengravur 4 thermisch kontaktierte Temperatursensoren 7 sowie zwei mit der Schalengravur 4 thermisch kontaktierte Heizelemente 8 auf. Eine Steuer- und Regeleinheit 9 ist dazu eingerichtet, abhängig von einem Messsignal der Temperatursensoren 7 die Heizleistung der Heizelemente 8 nachzuführen, etwa derart dass eine konstante Prozesstemperatur eingehalten wird, oder derart. Dass eine lokale Temperaturerhöhung erreicht wird, die lokal die Fließfähigkeit des eingeschossenen Materials erhöht.

Das Kernschießwerkzeug weist weiterhin einen Kerndichtesensor 10 auf, dessen Messsignal ebenso von der Steuer- und Regeleinheit 9 ausgewertet und dazu herangezogen wird, bedarfsweise die Heizleistung des Heizelements 8 nachzuführen. Ein geeigneter Kerndichtesensor 10 ist beispielsweise ein Ultraschallsensor.

Das Werkzeugoberteil 2 und das Werkzeugunterteil 3 sind als Platten 11 ausgebildet, welche die Schalengravur 4 aufweisen. Die Dicke der Platte 11 ist wesentlich geringer als eine Tiefe der Schalengravur 4, was dazu führt, dass an der dem Formhohlraum 5 abgewandten Außenseite 6 eine erhabene Kontur 12 ausgebildet ist, welche zu einer den Formhohlraum begrenzenden Kontur der Schalengravur 4 negativ ausgebildet ist.

Das Kernschießwerkzeug 1 weist weiterhin ein Formentlüftungssystem 13 auf, das an die Platten 11, insbesondere im Bereich der Schalengravur 4 angeschlossen ist. Das Formentlüftungssystem dient dazu, den Formhohlraum 5 während des Einschießens des mit dem Bindemittel versetzten Formgrundstoffs definiert zu entlüften, so dass eine gleichmäßige Befüllung des Formhohlraums 5 mit dem Formgrundstoff und damit eine möglichst homogene Dichte des Kerns erreicht wird. Das Formentlüftungssystem 13 weist mehrere Luftdrucksensoren 14 auf, die an den unterschiedlichen Positionen des Formhohlraums einen jeweiligen Entlüftungsdruck des Formhohlraums 5 messen.

Das Formentlüftungssystem weist weiterhin einen Ventilblock 16 mit mehreren unabhängig voneinander ansteuerbaren Ventilen auf. Jedes der Ventile ist über eine separate Luftleitung 15 mit einer anderen der Positionen des Formhohlraums 5 fluidisch in Verbindung gebracht. Dazu kann die Schalengravur 4 Durchgangsbohrungen aufweisen, an welche die Luftleitungen 15 angeschlossen sind. Die Steuer- und die Regeleinheit 9 kann dazu eingerichtet sein, abhängig von mindestens einem Messsignal der Luftdrucksensoren 14 einen Öffnungsgrad mindestens eines der Ventile zu regeln, etwa unter der Maßgabe, eine möglichst gleichmäßige Befüllung des Formhohlraums 5 mit dem Formgrundstoff bei dem Einschießen zu erreichen.

Das Formentlüftungssystem 13 kann weiterhin die Funktion eines Formbelüftungssystems für die selektive Luftdruckbeaufschlagung des Formhohlraums 5 an unterschiedlichen Positionen des Formhohlraums 5 aufweisen. Die Formbelüftung kann beispielsweise dazu verwendet werden, nach dem Einschießen und Erstarren des Formgrundstoffs, mithin nach der Ausbildung des Kerns im Formhohlraum 5, den Kern aus dem Formhohlraum 5 herauszutreiben.

Aufgrund der Schalenbauweise wird ein effizientes Kernschießwerkzeugs realisiert, da die Wärmekapazität des Kernschießwerkzeugs gegenüber konventionellen Werkzeugen herabgesetzt ist. Im Umkehrschluss führt die geringere Wärmekapazität des Kernschießwerkzeugs in Schalenbauweise auch dazu, dass die Wärmeeinbringung von außerhalb des Kernschießwerkzeugs in den Hohlraum des Kernschießwerkzeugs ohne große zeitliche Verzögerung und bei vergleichsweise geringen Heizleistungen möglich ist. Die Verwendung einer Heizung ermöglicht es, die Kerneigenschaften zu variieren. Mithilfe von Temperatur- und Kerndichtesensorik kann eine laufende Qualitätssicherung in-situ realisiert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Kernschießwerkzeug
- 2: Werkzeugoberteil
- 3: Werkzeugunterteil
- 4: Schalengravur
- 5: Formhohlraum
- 6: Außenseite
- 7: Temperatursensor
- 8: Heizelement
- 9: Steuer- und Regeleinheit
- 10: Kerndichtesensor
- 11: Platte
- 12: Erhabene Kontur
- 13: Forment- und/oder belüftungssystem
- 14: Luftdrucksensor
- 15: Luftleitung
- 16: Ventilblock
- 17: Kernkasten

## Patentansprüche

1. Gusswerkzeug (1) mit einem Werkzeugoberteil (2) und einem Werkzeugunterteil (3), die an gegenüber liegenden Seiten jeweils mindestens eine als Schalengravur (4) ausgebildete Gravur aufweisen und einen Formhohlraum (5) bilden, dass die Schalengravur (4) an einer dem Formhohlraum (5) abgewandten Außenseite (6) mindestens einen physikalischen Sensor (7) aufweist, der dazu eingerichtet ist, eine physikalische Messgröße bezüglich eines in dem Formhohlraum (5) aufgenommenen Materials zu erfassen, wobei das Gusswerkzeug (1) mindestens ein mit der Schalengravur (4) thermisch gekoppeltes Heizelement (8) und eine Steuer- und Regeleinheit (9) aufweist, **dadurch gekennzeichnet, dass** der physikalische Sensor (7) einen mit der Schalengravur (4) mechanisch gekoppelten Dichtesensor (10) zur Ermittlung einer Dichte eines in den Formhohlraum (5) eingeschossenen Materials aufweist, wobei die Steuer- und Regeleinheit (9) dazu eingerichtet ist, abhängig von einem Messsignal des Dichtesensors (10) eine Heizleistung des Heizelements (8) nachzuführen.

2. Gusswerkzeug (1) nach Anspruch 1, bei dem der physikalische Sensor (7) einen mit der Schalengravur (4) thermisch gekoppelter Temperatursensor aufweist, wobei die Steuer- und Regeleinheit (9) dazu eingerichtet ist, abhängig von einem Messsignal des Temperatursensors eine Heizleistung des Heizelements (8) nachzuführen.

3. Gusswerkzeug (1) nach einem der vorangegangenen Ansprüche, bei dem die Schalengravur (4) zumindest im Bereich eines Messfelds des Sensors (7) eine Wandstärke aufweist, die zwischen 0,5 und 15 mm, vorzugsweise zwischen 0,5 und 10 mm und besonders bevorzugt zwischen 0,5 und 3 mm.

4. Gusswerkzeug (1) nach einem der vorangegangenen Ansprüche, bei dem an die Schalengravur (4) ein mehrkanaliges Formentlüftungssystem (13) für die Entlüftung des Formhohlraums (5) an unterschiedlichen Positionen angeschlossen ist, wobei das Formentlüftungssystem (13) mehrere Luftdrucksensoren (14) aufweist, die an den unterschiedlichen Positionen einen jeweiligen Entlüftungsdruck des Formhohlraums (5) messen.

5. Gusswerkzeug (1) nach Anspruch 4, bei dem das Formentlüftungssystem (13) weiterhin einen Ventilblock (16) mit mehreren unabhängig voneinander steuerbaren Ventilen aufweist, wobei jedes Ventil über eine Luftleitung (15) mit einer anderen der Positionen fluidisch in Verbindung steht, wobei die Steuer- und Regeleinheit (9) dazu eingerichtet ist, abhängig von mindestens einem Messsignal der Luftdrucksensoren (14) einen Öffnungsgrad mindestens eines der Ventile zu regeln.

6. Gusswerkzeug (1) nach einem der vorangegangen Ansprüche, bei dem an die Schalengravur (4) ein mehrkanaliges Formbelüftungssystem (13) für die selektive Luftdruckbeaufschlagung des Formhohlraums (5) an unterschiedlichen Positionen des Formhohlraums (5) angeschlossen ist, wobei das Formbelüftungssystem (13) einen Ventilblock (16) mit mehreren unabhängig voneinander steuerbaren Ventilen aufweist und jedes Ventil über eine Luftleitung (15) mit einer anderen der Positionen fluidisch in Verbindung steht.

7. Gusswerkzeug (1) nach einem der vorangegangen Ansprüche, bei dem das mindestens eine Heizelement (8) mit einer erhabenen Kontur (12) der Platte (11), die zu einer Kontur der Schalengravur (4) zumindest abschnittsweise korrespondiert, thermisch gekoppelt ist.

8. Gusswerkzeug (1) nach Anspruch 7, bei dem das Heizelement (8) eine Geometrie aufweist, die eine erhabene Kontur (12) der Platte (11) an ihrer der Schalengravur (4) gegenüber liegenden Seite nachbildet.

9. Gusswerkzeug (1) nach einem der vorangegangen Ansprüche, das ein Auswerfsystem aufweist, das dazu eingerichtet ist, die Schalengravur (4) zwischen einer Ausgangsgeometrie und einer Auswerfgeometrie zu verformen.

10. Gusswerkzeug (1) nach einem der vorangegangenen Ansprüche, bei dem die Platte (11), vorzugsweise die Schalengravur (4) der Platte (11), abschnittsweise aus einem ersten Material und abschnittsweise aus einem zweiten Material besteht, wobei die beiden Materialien sich unterscheidende Elastizitätsmodule aufweisen.

11. Gusswerkzeug (1) nach einem der vorangegangenen Ansprüche, bei dem die Schalengravur (4) an einer dem Formhohlraum (5) zugewandte Innenseite eine die Haftung zwischen der Schalengravur (4) und dem in dem Formhohlraum (5) aufgenommenen Material vermindernde Oberflächenbeschichtung aufweist.

12. Gusswerkzeug (1) nach einem der vorangegangenen Ansprüche, das ein Kernschießwerkzeug oder eine Kokille ist.

13. Gießverfahren, das die Schritte aufweist:
- Bereitstellen eines Gusswerkzeugs (1) nach einem der vorangegangenen Ansprüche und Einschießen eines fließfähigen und aushärtbaren Materials, etwa eines mit einem Bindemittel versetzten Formgrundstoff, in den Formhohlraum (5) unter einem Schießdruck, wobei die Schalengravur (4) mit einem Heizelement (8) geheizt wird; und
- Messen einer physikalische Messgröße bezüglich des in den Formhohlraum (5) einschießenden Materials, etwa einer Temperatur der Schalengravur (4) während des Einschießens, und Nachregeln einer Heizleistung des Heizelements (8) abhängig von der gemessenen Temperatur, wobei während des Einschießens eine Dichte des eingeschossenen Materials gemessen und abhängig von der gemessenen Dichte die Heizleistung des Heizelements (8) nachgeführt wird.

14. Gießverfahren nach Anspruch 13, bei dem während des Einschießens mit einem mehrkanaligen Formentlüftungssystem (13) der Formhohlraum (5) an unterschiedlichen Positionen entlüftet und mit Luftdrucksensoren (14) an den unterschiedlichen Positionen ein jeweiliger Entlüftungsdruck des Formhohlraums (5) gemessen wird.

15. Gießverfahren nach Anspruch 14, bei dem abhängig von mindestens einem Messsignal der Luftdrucksensoren (14) ein Öffnungsgrad mindestens eines Ventils geregelt wird, das über eine Luftleitung (15) mit einer der Positionen fluidisch in Verbindung steht.

16. Gießverfahren nach einem der Ansprüche 14 bis 15, bei dem nach dem Einschießen und Abkühlen des Gusswerkzeugs (1) ein in dem Formhohlraum (5) angeordnetes Gussstück mit einem Formbelüftungssystem aus dem Formhohlraum (5) ausgetrieben wird, wozu das Formbelüftungssystem über einen Ventilblock (16) mit mehreren unabhängig voneinander steuerbaren Ventilen, die jeweils über eine Luftleitung (15) mit einer anderen Position des Formhohlraums (5) fluidisch in Verbindung stehen, das Gussstück mit einem Luftdruck beaufschlagt.

## Claims

1. A casting tool (1) having a tool upper part (2) and a tool lower part (3), which each have at least one engraving in the form of a shell engraving (4) on opposite sides and form a mould cavity (5), the shell engraving (4) having at least one physical sensor (7) on an outer side (6) facing away from the mould cavity (5), which physical sensor (7) is set up to detect a physical measure with respect to a material accommodated in the mould cavity (5), wherein the casting tool (1) comprises at least one heating element (8) thermally coupled to the shell engraving (4) and a control and regulating unit (9), **characterized in in that** the physical sensor (7) has a density sensor (10), which is mechanically coupled to the shell engraving (4), for determining a density of a material which is injected into the mould cavity (5), with the control and regulating unit (9) being set up to readjust a heating power of the heating element (8) as a function of a measurement signal of the density sensor (10).

2. The casting tool (1) according to Claim 1, in which the physical sensor (7) has a temperature sensor thermally coupled to the shell engraving (4), the control and regulating unit (9) being set up to adjust a heating power of the heating element (8) as a function of a measurement signal of the temperature sensor.

3. The casting tool (1) according to one of the preceding claims, in which the shell engraving (4) has, at least in the region of a measuring field of the sensor (7), a wall thickness which is between 0.5 and 15 mm, preferably between 0.5 and 10 mm and particularly preferably between 0.5 and 3 mm.

4. The casting tool (1) according to any one of the preceding claims, wherein a multi-channel mould venting system (13) for venting the mould cavity (5) at different positions is connected to the shell engraving (4), the mould venting system (13) comprising a plurality of air pressure sensors (14) which measure a respective venting pressure of the mould cavity (5) at the different positions.

5. The casting tool (1) according to claim 4, wherein the mould venting system (13) further comprises a valve block (16) with a plurality of valves which can be controlled independently of one another, each valve being fluidically connected to a different one of the positions via an air line (15), the control and regulating unit (9) being set up to regulate a degree of opening of at least one of the valves as a function of at least one measurement signal of the air pressure sensors (14).

6. The casting tool (1) according to any one of the preceding claims, wherein a multi-channel mould ventilation system (13) for selectively applying air pressure to the mould cavity (5) is connected to the shell engraving (4) at different positions of the mould cavity (5), wherein the mould ventilation system (13) comprises a valve block (16) with a plurality of independently controllable valves and each valve is fluidically connected to a different one of the positions via an air line (15).

7. The casting tool (1) according to any one of the preceding claims, wherein the at least one heating element (8) is thermally coupled to a raised contour (12) of the plate (11) corresponding at least in sections to a contour of the shell engraving (4).

8. The casting tool (1) according to claim 7, in which the heating element (8) has a geometry which reproduces a raised contour (12) of the plate (11) on its side opposite the shell engraving (4).

9. The casting tool (1) according to any one of the preceding claims, comprising an ejection system adapted to deform the shell engraving (4) between an initial geometry and an ejection geometry.

10. The casting tool (1) according to any one of the preceding claims, wherein the plate (11), preferably the shell engraving (4) of the plate (11), consists in sections of a first material and in sections of a second material, the two materials having different elastic moduli.

11. The casting tool (1) according to any one of the preceding claims, wherein the shell engraving (4) has, on an inner side facing the mould cavity (5), a surface coating reducing the adhesion between the shell engraving (4) and the material received in the mould cavity (5).

12. The casting tool (1) according to any one of the preceding claims, which is a core shooting tool or a mould.

13. A casting method comprising the steps of:
- Providing a casting tool (1) according to any one of the preceding claims and shooting a flowable and curable material, such as a mould base material mixed with a binder, into the mould cavity (5) under a shooting pressure, wherein the shell engraving (4) is heated with a heating element (8); and
- Measuring a physical measure with respect to the material being injected into the mould cavity (5), for example a temperature of the shell engraving (4) during the injection, and readjusting a heating power of the heating element (8) as a function of the measured temperature, a density of the injected material being measured during the injection and the heating power of the heating element (8) being readjusted as a function of the measured density.

14. The casting method according to claim 13, in which the mould cavity (5) is vented at different positions during the injection with a multi-channel mould venting system (13) and a respective venting pressure of the mould cavity (5) is measured with air pressure sensors (14) at the different positions.

15. The casting method according to claim 14, in which a degree of opening of at least one valve, which is fluidically connected to one of the positions via an air line (15), is controlled as a function of at least one measurement signal of the air pressure sensors (14).

16. The casting method according to any one of claims 14 to 15, in which, after shooting and the casting tool (1) has cooled, a casting arranged in the mould cavity (5) is expelled from the mould cavity (5) by means of a mould ventilation system, for which purpose the mould ventilation system applies an air pressure to the casting via a valve block (16) having a plurality of valves which can be controlled independently of one another and are each fluidically connected to a different position of the mould cavity (5) via an air line (15).

## Revendications

1. Outil de coulée (1) avec une partie supérieure d'outil (2) et une partie inférieure d'outil (3), qui présentent chacune, sur des côtés opposés, au moins une gravure conçue comme une gravure de coque (4) et qui constituent une cavité de moule (5), la gravure de coque (4) comprenant, au niveau d'un côté externe (6) opposé à la cavité de moule (5), au moins un capteur physique (7) qui est conçu pour mesure une grandeur de mesure physique concernant un matériau logé dans la cavité de moule (5), dans lequel l'outil de coulée (1) comprend au moins un élément chauffant (8) couplé de manière thermique avec la gravure de coque (4) et une unité de commande et de régulation (9), **caractérisé en ce que** le capteur physique (7) comprend un capteur de densité (10), couplé de manière mécanique avec la gravure de coque (4), pour la détermination d'une densité d'un matériau injecté dans la cavité de moule (5), dans lequel l'unité de commande et de régulation (9) est conçue pour contrôler, en fonction d'un signal de mesure du capteur de densité (10), une puissance de chauffage de l'élément chauffant (8).

2. Outil de coulée (1) selon la revendication 1, dans lequel le capteur physique (7) comprend un capteur de température couplé de manière thermique avec la gravure de coque (4), dans lequel l'unité de commande et de régulation (9) est conçue pour contrôler, en fonction d'un signal de mesure du capteur de température, une puissance de chauffage de l'élément chauffant (8).

3. Outil de coulée (1) selon l'une des revendications précédentes, dans lequel la gravure de coque (4) présente, au moins au niveau d'un champ de mesure du capteur (7), une épaisseur de paroi qui est entre 0,5 et 15 mm, de préférence entre 0,5 et 10 mm et plus particulièrement de préférence entre 0,5 et 3 mm.

4. Outil de coulée (1) selon l'une des revendications précédentes, dans lequel, à la gravure de coque (4), est raccordé un système de désaération de moule multi-canal (13) pour la désaération de la cavité de moule (5), à différentes positions, dans lequel le système de désaération de moule (13) comprend plusieurs capteurs de pression d'air (14) qui mesurent, à différentes positions, une pression de désaération correspondante de la cavité de moule (5).

5. Outil de coulée (1) selon la revendication 4, dans lequel le système de désaération de moule (13) comprend en outre un bloc de soupapes (16) avec plusieurs soupapes contrôlables indépendamment les unes des autres, dans lequel chaque soupape est en liaison fluidique avec une autre des positions par l'intermédiaire d'une conduite d'air (15), dans lequel l'unité de commande et de régulation (9) est conçue pour réguler, en fonction d'au moins un signal de mesure des capteurs de pression d'air (14), un degré d'ouverture d'au moins une des soupapes.

6. Outil de coulée (1) selon l'une des revendications précédentes, dans lequel, à la gravure de coque (4), est raccordé un système de désaération de moule multi-canal (13) pour l'alimentation sélective en pression d'air de la cavité de moule (5) à différentes positions de la cavité de moule (5), dans lequel le système de désaération de moule (13) comprend un bloc de soupapes (16) avec plusieurs soupapes contrôlables indépendamment les unes des autres et chaque soupape est en liaison fluidique avec une autre des positions par l'intermédiaire d'une conduite d'air (15).

7. Outil de coulée (1) selon l'une des revendications précédentes, dans lequel l'au moins un élément chauffant (8) est couplé thermiquement avec un contour surélevé (12) de la plaque (11), qui correspond à un contour de la gravure de coque (4), au moins à certains endroits.

8. Outil de coulée (1) selon la revendication 7, dans lequel l'élément chauffant (8) présente une géométrie qui reproduit un contour surélevé (12) de la plaque (11) sur son côté opposé à la gravure de coque (4).

9. Outil de coulée (1) selon l'une des revendications précédentes, qui comprend un système d'éjection qui est conçu pour déformer la gravure de coque (4) entre une géométrie initiale et une géométrie d'éjection.

10. Outil de coulée (1) selon l'une des revendications précédentes, dans lequel la plaque (11), de préférence la gravure de coque (4) de la plaque (11), est constituée à certains endroits d'un premier matériau et à certains endroits d'un deuxième matériau, dans lequel les deux matériaux présentent des modules d'élasticité différents.

11. Outil de coulée (1) selon l'une des revendications précédentes, dans lequel la gravure de coque (4) comprend, sur un côté interne orienté vers la cavité de moule (5), un revêtement de surface réduisant l'adhérence entre la gravure de coque (4) et le matériau logé dans la cavité de moule (5).

12. Outil de coulée (1) selon l'une des revendications précédentes, qui est un outil d'injection à noyau ou une coquille.

13. Procédé de coulée, qui comprend les étapes suivantes :
- mise à disposition d'un outil de coulée (1) selon l'une des revendications précédentes, et injection d'un matériau fluide et durcissable, par exemple un matériau de base avec un liant, dans la cavité de moule (5) avec une pression d'injection, dans lequel la gravure de coque (4) est chauffée avec un élément chauffant (8) ; et
- mesure d'une grandeur de mesure physique concernant le matériau à injecter dans la cavité de moule (5), par exemple d'une température de la gravure de coque (4) pendant l'injection et régulation d'une puissance de chauffage de l'élément chauffant (8) en fonction de la température mesurée, dans lequel, pendant l'injection, une densité du matériau injecté est mesurée et la puissance de chauffage de l'élément chauffant (8) est contrôlée en fonction de la densité mesurée.

14. Procédé de coulée selon la revendication 13, dans lequel, pendant l'injection, avec un système de désaération de moule multi-canal (13), la cavité de moule (5) est ventilée à différentes positions et, avec des capteurs de pression d'air (14), à différentes positions, une pression de désaération correspondante de la cavité de moule (5) est mesurée.

15. Procédé de coulée selon la revendication 14, dans lequel, en fonction d'au moins un signal de mesure des capteurs de pression d'air (14), un degré d'ouverture d'au moins une soupape qui est en liaison fluidique avec une des positions par l'intermédiaire d'une conduite d'air (15) est régulé.

16. Procédé de coulée selon l'une des revendications 14 à 15, dans lequel, après l'injection et le refroidissement de l'outil de coulée (1), une pièce moulée disposée dans la cavité du moule (5) est éjecté de la cavité du moule (5) avec un système de désaération de moule, le système de ventilation de moule sollicitant pour cela la pièce moulée par l'intermédiaire d'un bloc de soupapes (16) avec plusieurs soupapes contrôlables indépendamment les unes des autres, qui sont en liaison fluidique, par l'intermédiaire d'une conduite d'air (15), avec une autre position de la cavité de moule (5).
